# EUROPEAN PATENT APPLICATION

(11) **EP 2 230 463 A1**
(43) Date of publication of application: **22.09.2010**
(21) Application number: 08868078.0
(22) Date of filing: 16.12.2008
(51) Int. Cl.: F24C 7/02, H05B 6/64

(54) **COOKING DEVICE**

(30) Priority: 27.12.2007 JP 2007337594
(71) Applicant: Panasonic Corporation, Kadoma-shi Osaka 571-8501 (JP)
(72) Inventor: UCHIYAMA, Satomi, Chuo-ku, Osaka 540-6207 (JP)
(74) Representative: Grünecker, Kinkeldey, Stockmair & Schwanhäusser Anwaltssozietät
(86) International application number: PCT/JP2008/003796
(87) International publication number: WO 2009/084170

(57) **Abstract**

To provide a cooker in which high-frequency heating can be sufficiently implemented on an object to be heated on a heating plate provided at an intermediate height position in a heating chamber.

A first object to be heated 12a which is placed at a placing table 12c on a bottom surface of a heating chamber 11 can be cooked by a lower heat source including a high-frequency heat source 21 based on cooking information entered from a operation unit 23 under control through a control unit 24. Simultaneously, a second object to be heated 12b placed on a heating plate 30 which divides the heating chamber 11 into upper and lower sections can be cooked by an upper heat source 20. At this time, the farther a mounting position of the heating plate 30 is located from an upper heat source 20 by lowering the mounting position, the more high-frequency waves supplied to a heating chamber 11a lying on a lower side of the heating plate 30 from the high-frequency heat source 21 are supplied to an upper side of the heating plate 30. Therefore, the second object to be heated 12b can be high-frequency heated sufficiently. Because of this, while a surface of the second object to be heated 12b is cooked by the upper heat source 20, an interior portion thereof can be cooked with good efficiency.

## Description

### Technical Field

The present invention relates to a cooker which heats an object to be heated by dielectric heating.

### Background Art

Microwave ovens as typical microwave heating devices can heat directly food which is an object to be heated. Accordingly, the microwave ovens are an indispensable device of line for cooking due to conveniences of not needing to prepare pans and pots. In a popular one of the microwave ovens, a size of a space for accommodating the food in a heating chamber in which microwaves are propagated has width and depth dimensions of about 300 to 400 mm and a height dimension of about 200 mm.

In recent years, there are practically used microwave ovens having a horizontally wider heating chamber configuration which includes a flat bottom surface of the space for accommodating the food and has an increased width dimension of 400 mm or more relatively larger than the depth dimension, thereby improving conveniences in placing and heating a plurality of dishes in the heating chamber.

In addition, with an increase of functions to microwave ovens, microwave ovens have been introduced to marketplaces which have a "grilling function" in addition to the conventionally available so-called "heating function" (a high-frequency heating in which food is subjected to a microwave radiation so as to heat the food). The grilling function includes a method for heating a heating plate on which food is placed thereby heating the food via the heating plate, a method for heating food by a heater, or a function to cook food by a direct fired type (to provide the finish of the cooked food such that the outside is crispy while the inside is juicy) by combination of these methods.

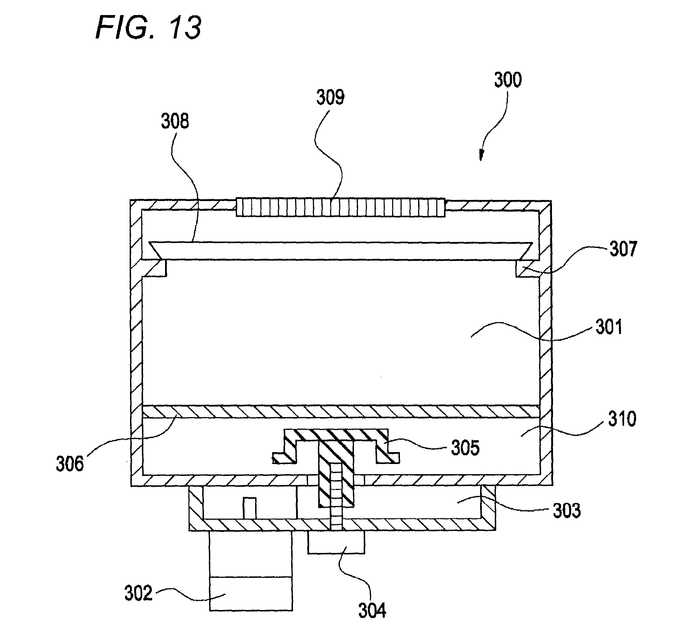

As shown in Fig. 13 illustrating a block diagram of a conventional high-frequency heating device, conventionally, this type of high-frequency heating device 300 includes: a wave guide 303 for transmitting microwaves radiated from a magnetron 300 serving as a typical microwave generating means; a heating chamber 301; a placing table 306 which is fixed in the heating chamber 301 for placing food (not shown) serving as a typical object to be heated and which has a property of easily transmitting microwaves therethrough since the placing table 306 is made of a low-loss dielectric material such as ceramics or glass; an antenna space 310 which is defined below the placing table 306 within the heating chamber 301; a rotating antenna 305 which is mounted in a vicinity of a center position of the heating chamber 301 and extends from the wave guide 303 to the antenna space 310 so as to radiate microwaves in the wave guide 303 into the heating chamber 301; a motor 304 serving as a typical driving means for rotationally driving the rotating antenna 305; a heating plate 308 which is installed in the heating chamber 301 depending on the applications; a plate receiving portion 307 for supporting the heating plate 308; and a heater 309 for electric heating.

When the heating function is selected to heat directly the object to be heated by high-frequency heating, a high-frequency heating operation is executed in a state where food etc. is placed on the placing table 306. Microwaves radiated from the magnetron 302 are transmitted to the rotating antenna 305 via the wave guide 303, and then the microwaves are radiated towards the heating chamber 301 from a radiating portion of the rotating aerial 305. At this time, generally, the rotating antenna 305 radiates microwaves while rotating at a constant speed so as to agitate the microwaves uniformly within the heating chamber 301.

When the grill function of a direct fired type is selected, food (for example, a leg of chicken, fish, etc.) is placed on the heating plate 308 placed on the plate receiving portion 307. In this state, a heating treatment for a front surface of the food is performed by the heater 309 positioned above the food. On the other hand, a heating treatment for a rear surface of the food is performed by the heating plate 308 which is heated to high temperatures by microwaves.

In the cooking by concentrating microwaves on the food, water in an interior of the food is evaporated excessively due to the nature of microwaves. On the contrary, in the process for heating the food by the heater and the heating plate, the food can be finished as the direct fired type such that the surface of the food is crispy while moisture and relish is sealed inside the food (see Patent Document 1).
Patent Document 1: JP-A-2004-71216 (pages 5 to 7, Fig. 1).

### Disclosure of Invention

### Technical Problem

The high-frequency heating to the object to be heated placed on the placing table serving as the bottom surface of the heating chamber can be directly adjusted. However, there has been a problem that high-frequency heating cannot be performed sufficiently to the object to be heated placed on the heating plate that is provided in an intermediate height position.

The invention has been made for solving the problem in the related art, and an object thereof is to provide a cooker in which high-frequency heating can be performed sufficiently to an object to be heated placed on a heating plate which is provided in an intermediate height position within a heating chamber.

### Technical Solution

According to the invention, there is provided a cooker including: a heating chamber having a bottom surface on which a first object to be heated is placed; a heating plate which is detachably provided in the heating chamber and which has an upper surface on which a second object to be heated is placed; an upper heat source provided on an upper side of the heating chamber, and a lower heat source provided on a lower side of the heating chamber and including at least a high-frequency heat source; an operation unit configured to receive an input of information on a heating treatment for the first and second objects to be heated; and a control unit configured to individually control the upper heat source and the lower heat source, based on the information on the heating treatment which is input through the operation unit, wherein the lower a mounting position of the heating plate becomes, the more high-frequency waves supplied to a heating chamber to a lower side of the heating plate from the high-frequency heat source are supplied to an upper side of the heating plate.

By this configuration, the first object to be heated placed on a placing table at the bottom surface of the heating chamber can be cooked by the lower heat source including the high-frequency heat source, based on the cooking information input through the operation unit by a control of the control unit. Simultaneously, the second object to be heated placed on the heating plate which divides the heating chamber into two upper and lower sections can be cooked by the upper heat source. At this time, the farther the mounting position of the heating plate is located from the upper heat source by lowering the mounting position, the more the high-frequency waves supplied to the heating chamber on the lower side of the heating plate from the high-frequency heat source are supplied to the upper side of the heating plate. Therefore, the second object to be heated can be heated by high-frequency sufficiently. Consequently, while a surface of the second object to be heated is cooked by the upper heat source, an interior portion thereof can be cooked with good efficiency.

Additionally, according to the invention, there is provided a cooker including: a heating having a bottom surface on which a first object to be heated is placed; a heating plate which is detachably provided in the heating chamber and which has an upper surface on which a second object to be heated is placed; a heat source configured to heat the heating chamber; an operation unit configured to receive information on a heating treatment for the first and second objects to be heated; and a control unit configured to control the heat source based on the information on the heating treatment which is input through the operation unit, wherein the control unit performed a control such that a temperature on a upper side of the heating plate in the heating chamber is higher than a temperature on a lower side of the heating plate, and wherein the lower a mounting position of the heating plate becomes, the more high-frequency waves supplied to a heating chamber on the lower side of the heating plate from the high-frequency heat source are supplied to the upper side of the heating plate.

By this configuration, the first object to be heated placed on a placing table at the bottom surface of the heating chamber can be cooked based on the cooking information input through the operation unit by the control of the control unit. Simultaneously, the second object to be heated placed on the heating plate which divides the heating chamber into two upper and lower sections can be cooked. At this time, the second object to be heated is cooked by controlling the temperature on the upper side of the heating plate is to be higher than that on the lower side thereof. In addition, the farther the mounting position of the heating plate is located from the upper heat source by lowering the mounting position, the more the high-frequency waves supplied to the heating chamber on the lower side of the heating plate from the high-frequency heat source are supplied to the upper side of the heating plate. Therefore, the second object to be heated can sufficiently be high-frequency heated. Consequently, while the surface of the second object to be heated is cooked by the upper heat source, the interior portion of the second object to be heated can be cooked with good efficiency.

In addition, in the cooker of the invention, side walls of the heating chamber are inclined in a direction in which a distance between the side walls increases as the side walls extend downwards.

By this configuration, the side walls of the heating chamber are inclined in the direction in which a distance between the side walls increases as the side walls extend downwards. Consequently, as the side walls extend downwards, gaps between side end faces of the heating plate and the side walls of the heating chamber increase, whereby the high-frequency waves supplied to the lower side of the heating plate move round the heating plate into the upper side of the heating plate.

Further, in the cooker of the invention, supporting members are provided on locking portions protruding from the side walls of the heating chamber towards the heating chamber side so as to support the heating plate, wherein the supporting members have supporting surfaces at higher positions from the locking portions and define larger high-frequency wave passages as the supporting portions are positioned lower within the heating chamber.

By this configuration, the lower the locking portions which support the heating plate are positioned in the heating chamber, the higher the height of the supporting members provided on the locking portions become. Consequently, the high-frequency passages provided in the supporting portions can be formed larger, and therefore, the high-frequency waves supplied to the lower side of the heating plate are allowed to move round the heating plate into the upper side of the heating plate.

Further, in the cooker of the invention, supporting grooves are recessed from the side walls of the heating chamber towards the side wall sides so as to support the heating plate, and the supporting grooves have a higher height as the supporting grooves are positioned lower in the heating chamber.

By this configuration, when the heating plate is supported in the supporting grooves in the side walls of the heating chamber, gaps between an upper surface of the heating plate and upper surfaces of the supporting grooves become larger. Therefore, the high-frequency waves supplied to the lower side of the heating plate are allowed to move round the heating plate into the upper side of the heating plate.

In addition, the cooker of the invention further includes a steaming heat source configured to supply steam to at least one of the upper and lower sides of the heating plate in the heating chamber.

By this configuration, at least one of the first object to be heated and the second object to be heated can be steam heated, whereby the object to be heated can be heated in a state where the surface of the object to be heated is moisturized.

Further, the cooker of the invention includes a temperature detection means for detecting a temperature of the object to be heated, wherein in a case of a single-item cooking in which one of the first object to be heated and the second object to be heated is cooked, the control unit controls the heat source based on the temperature detected by the temperature detection means, and wherein in the case of cooking the first object to be heated and the second object to be heated, the control unit controls the heat source based on time.

By this configuration, in the case of the single-item cooking, the heat source is controlled based on the temperature detected by the temperature detection means, while in the case of cooking the first and second objects to be heated, the heat source is controlled based on time, whereby the efficient cooking can be performed.

In addition, the cooker of the invention includes a heating element configured to generate heat by absorbing high-frequency waves which is provided at a part of a reflecting portion of the heating plate.

By this configuration, since the heating plate is heated by absorbing a part of high-frequency waves, the second object to be heated placed on the heating plate can be heated from a lower side thereof, whereby the second object to be heated can be cooked with good efficiency.

Additionally, the cooker of the invention includes an optical heater provided at a part of the heat source.

By this configuration, a strong heating capability can be obtained within a short length of time for efficient cooking by use of the optical heater.

Further, in the cooker of the invention, the optical heater is a steam transmissive heater.

By this configuration, since the optical heater can be used while using a steaming heat source, the object to be heated can be heated quickly and in a state where the surface of the object to be heated is moisturized.

### Advantageous Effects

In the present invention, the first object to be heated placed on a placing table at the bottom surface of the heating chamber can be cooked by the lower heat source including the high-frequency heat source, based on the cooking information input through the operation unit by a control of the control unit. Simultaneously, the second object to be heated placed on the heating plate which divides the heating chamber into two upper and lower sections can be cooked by the upper heat source. At this time, the farther the mounting position of the heating plate is located from the upper heat source by lowering the mounting position, the more the high-frequency waves supplied to the heating chamber on the lower side of the heating plate from the high-frequency heat source are supplied to the upper side of the heating plate. Therefore, the second object to be heated can be heated by high-frequency sufficiently. Consequently, the present invention can provide a cooker having advantages that, while a surface of the second object to be heated is cooked by the upper heat source, an interior portion thereof can be cooked with good efficiency.

### Brief Description of the Drawings

Fig. 1 is a schematic perspective view of a cooker according to a first embodiment of the invention.
Fig. 2 is a sectional view resulting from cutting the cooker in a left-right direction.
Fig. 3 is a sectional view resulting from cutting the cooker of the embodiment of the invention in a front-rear direction.
Fig. 4 is a sectional view showing a state in which temperatures within a heating chamber are detected by a temperature detection means.
Fig. 5 is a sectional view of the temperature detection means.
Fig. 6 is a plan view showing a detection range by the temperature detection means.
Fig. 7 is a perspective view of a heating plate.
Fig. 8(A) is a sectional view showing an installation example of a heating element in a section taken along the VIII-VIII position in Fig. 7, and Fig. 8(B) is a similar sectional view showing another example of an installation position of a heating element.
Fig. 9 is a front view showing a first example of a main part of the cooker of the invention.
Fig. 10 is a front view showing a modified example to Fig. 9.
Fig. 11 (A) is a front view showing a second example of a main part of the cooker according to the invention, and Fig. 11(B) is a sectional view taken along the B-B position in Fig. 11 (A).
Fig. 12 is a sectional view showing a third example of a main part of the cooker according to the invention.
Fig. 13 is a block diagram of a conventional high-frequency heating device.

### Explanation of Reference

- 10: cooker
- 11: heating chamber
- 11c: bottom surface
- 11e, 11f: side wall
- 12a: first object to be heated
- 12b: second object to be heated
- 17: locking portion
- 18: supporting member
- 18a: supporting surface
- 18b: high-frequency passage
- 19: supporting groove
- 20: infrared ray generating means (upper heat source)
- 20a: argon heater (optical heater)
- 20b: Miraclon heater (optical heater)
- 21: high-frequency heat source (lower heat source)
- 22: steaming heat source
- 23: operation unit
- 24: control unit
- 30: heating plate
- 34: heating element
- 50: temperature detection means

### Best Mode for Carrying out the Invention

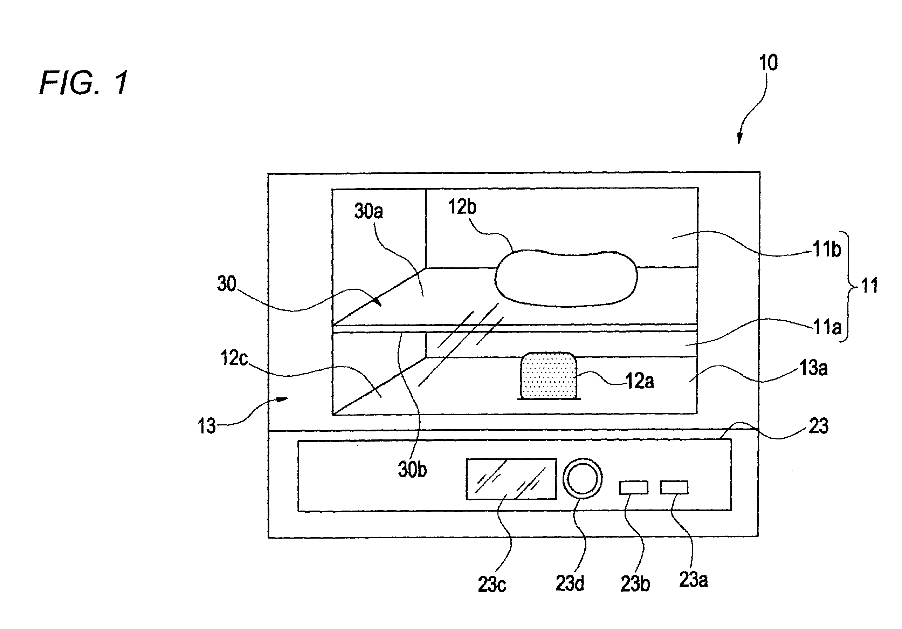

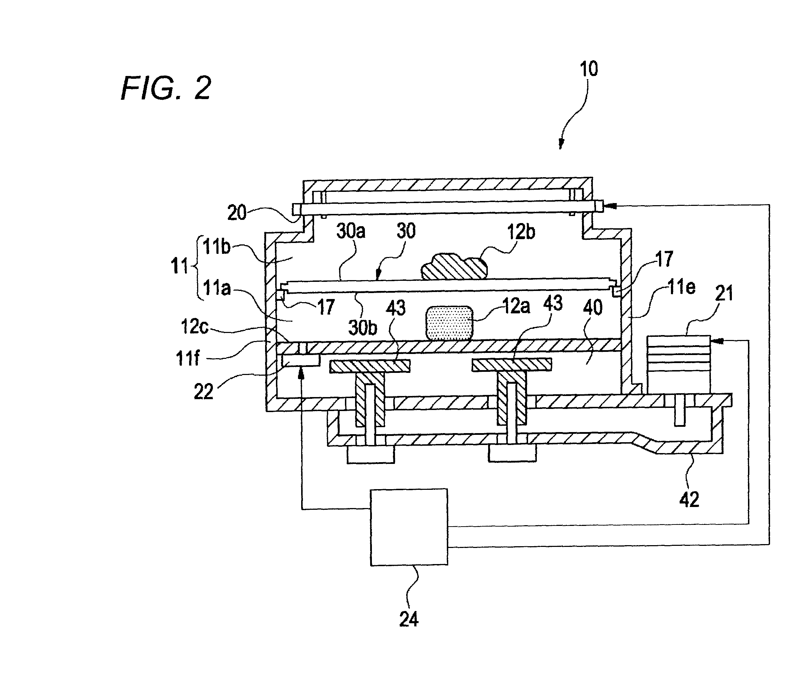

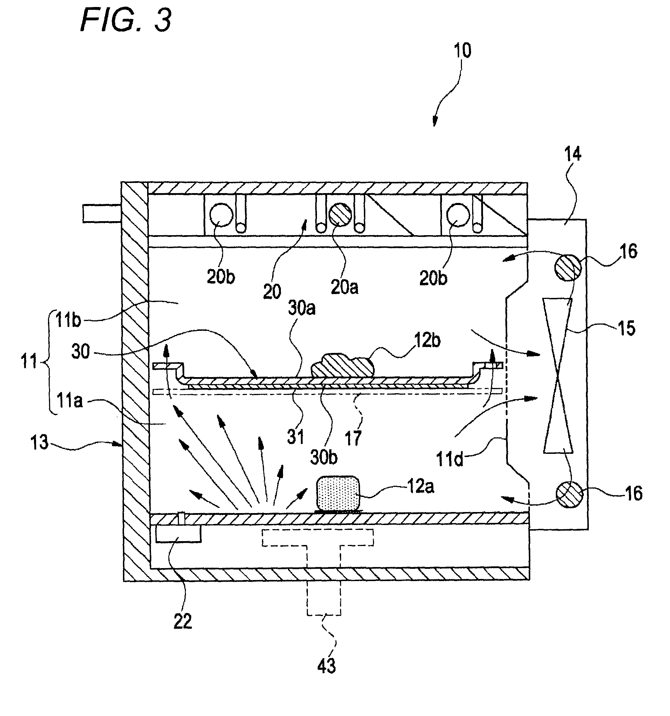

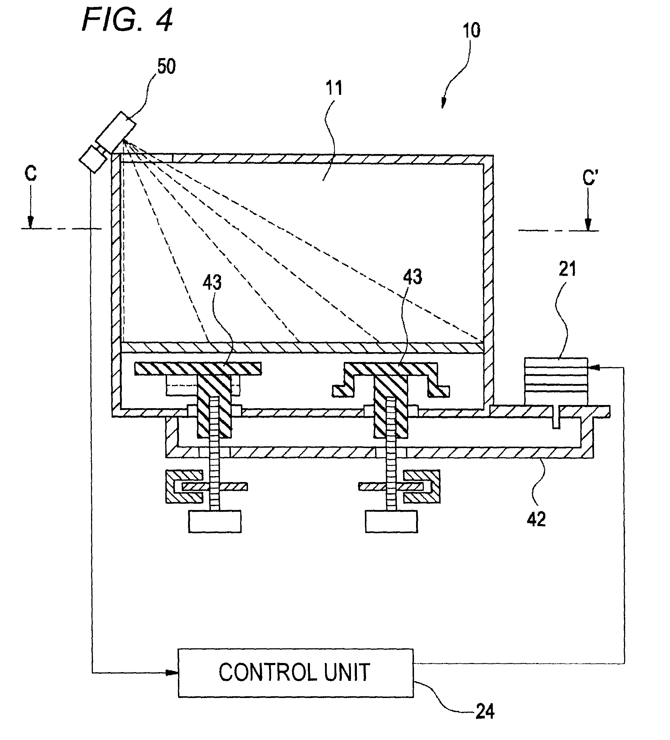

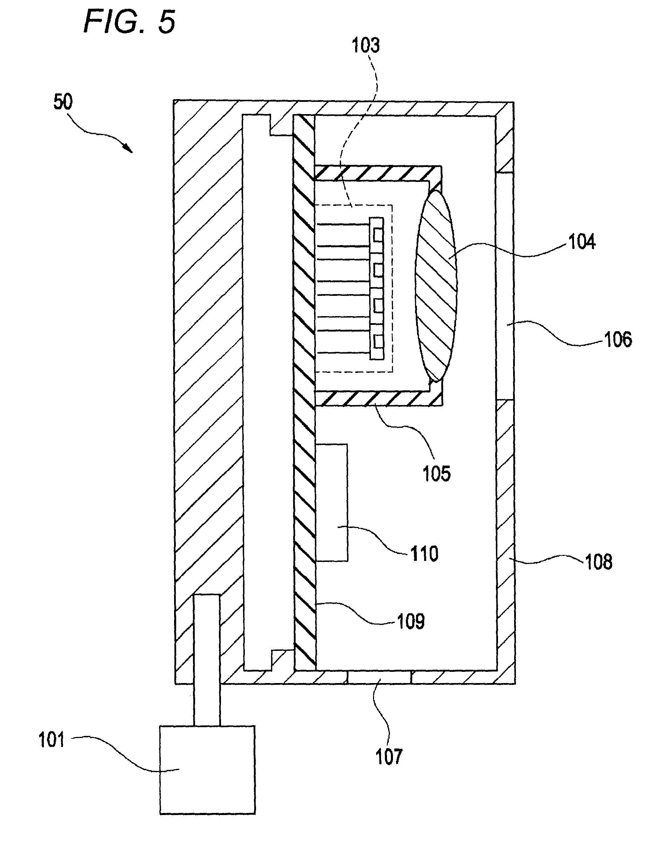

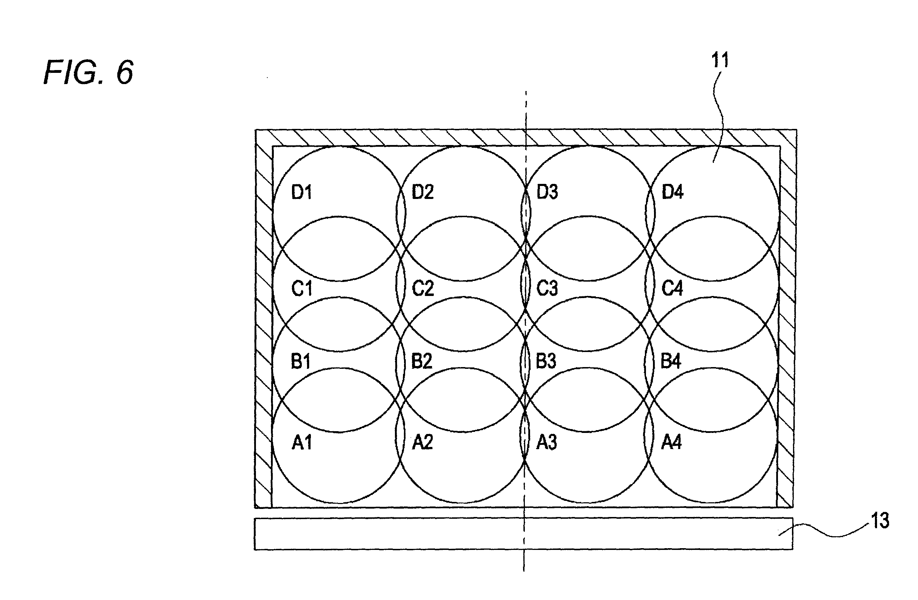

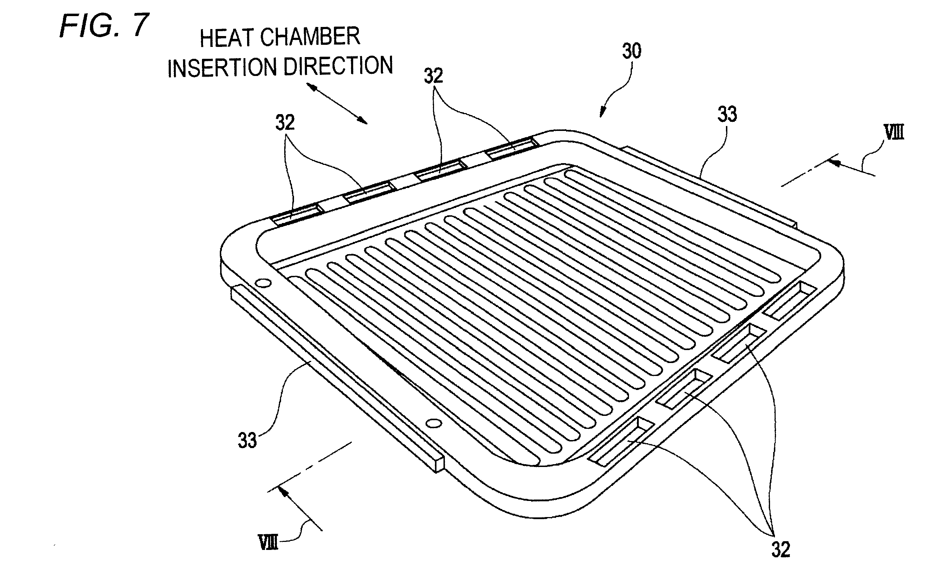

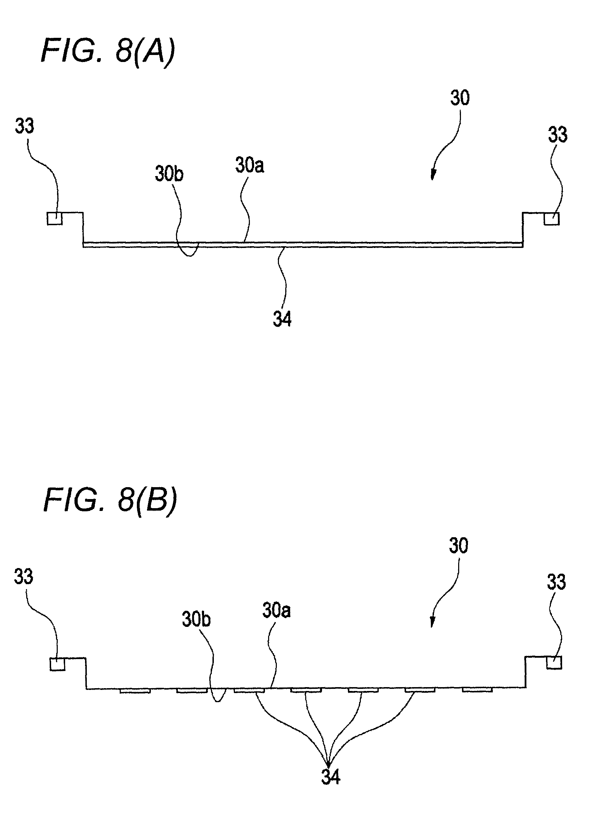

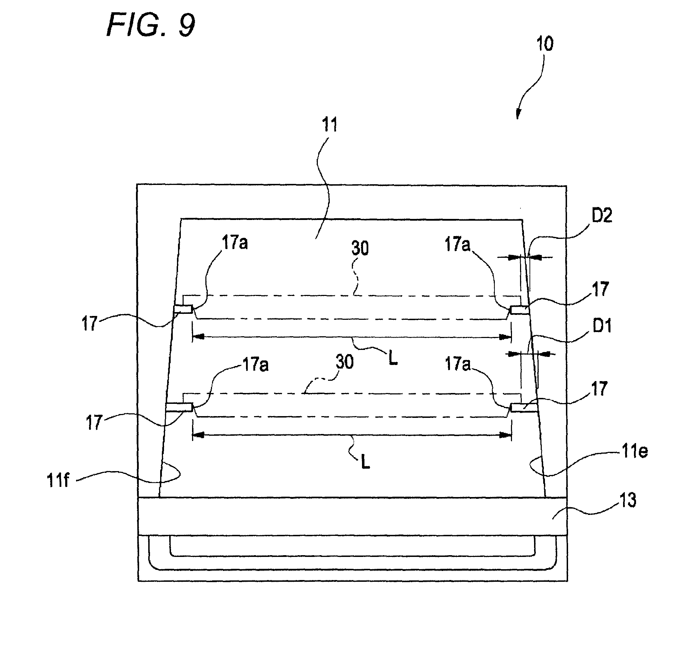

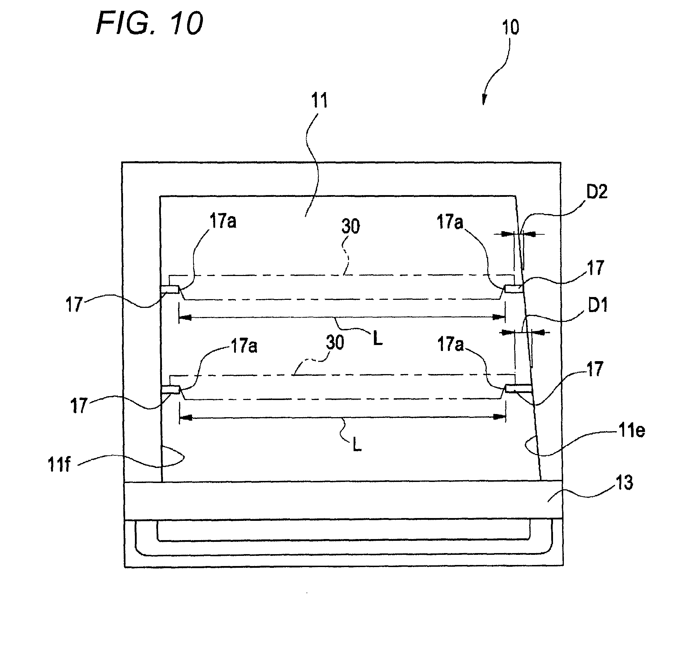

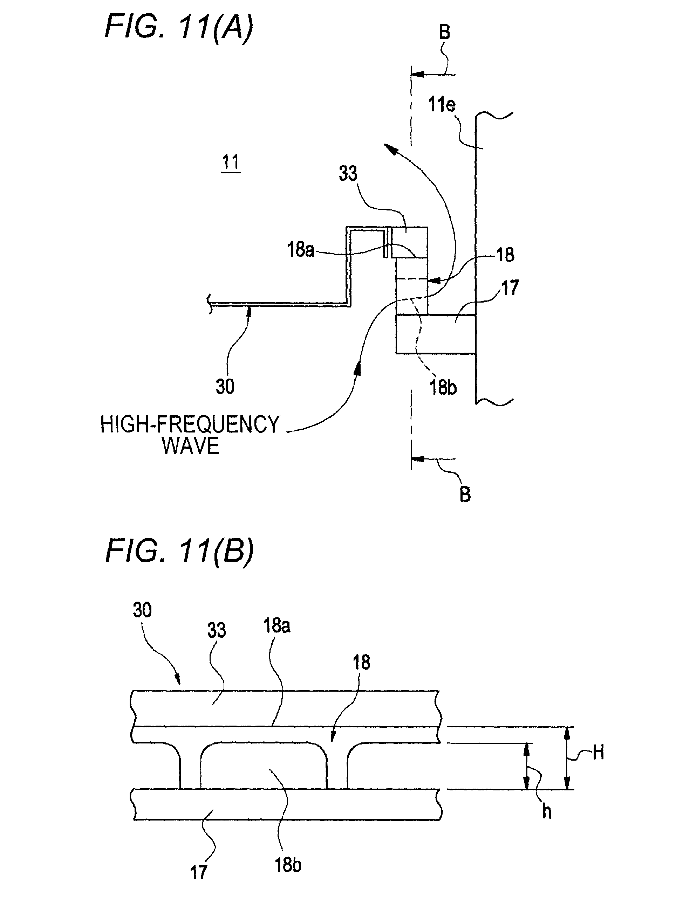

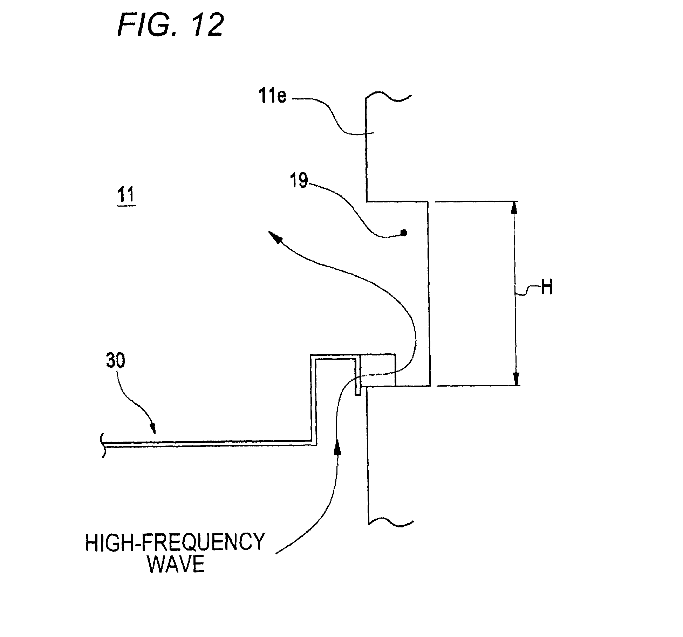

A cooker according to an embodiment of the invention will be described below with reference to drawings. Fig. 1 is a schematic perspective view of a cooker according to a first embodiment of the invention, Fig. 2 is a sectional view resulting from cutting the cooker in a left-right direction (a left-right direction when viewed toward a front of the cooker), Fig. 3 is a sectional view resulting from cutting the cooker of the embodiment of the invention in a front-rear direction (a front-rear direction when viewed toward a front of the cooker), Fig. 4 is a sectional view showing a state in which temperatures within a heating chamber are detected by a temperature detection means, Fig. 5 is a sectional view of the temperature detection means, Fig. 6 is a plan view showing a detection range by the temperature detection means, Fig. 7 is a perspective view of a heating plate, Fig. 8(A) is a sectional view showing an installation example of a heating element in a section taken along the VIII-VIII position in Fig. 7, and Fig. 8(B) is a similar sectional view showing another example of an installation position of a heating element, Fig. 9 is a front view showing a first example of a main part of the cooker of the invention, Fig. 10 is a front view showing a modified example to Fig. 9, Fig. 11(A) is a front view showing a second example of a main part of the cooker according to the invention, and Fig. 11(B) is a sectional view taken along the B-B position in Fig. 11 (A), and Fig. 12 is a sectional view showing a third example of a main part of the cooker according to the invention.

As shown in Figs. 1 and 2, a cooker of the invention includes a heating chamber 11 having a bottom surface 12c on which a first object to be heated 12a is placed, and a heating plate 30 having an upper surface 30a on which a second object to be heated 12b is placed is detachably provided in the heating chamber 11. Consequently, the heating chamber 11 is divided into a lower heating chamber 11a and an upper heating chamber 11 b by the heating plate 30. In addition, the cooker includes: an upper heat source (20) provided on an upper side of the heating chamber 11; a lower heat source (21) which is provided on a lower side of the heating chamber 11 and which has at least a high-frequency heat source 21; an operation unit 23 configured to receive an input of information on a heating treatment for the first and second objects to be heated 12a, 12b; and a control unit 24 configured to individually control the upper heat source (20) and the lower heat source (21), based on the information on the heating treatment which is input through the operation unit 23. Further, the lower a mounting position of the heating plate 30 becomes, the more high-frequency waves supplied to the lower heating chamber 11a on the lower side of the heating plate 30 from the high-frequency heat source 21 are supplied to the upper side of the heating plate 30.

A door 13 is provided at a front opening of the heating chamber 11 which opens and closes so as to seal the heating chamber 11. The door 13 includes a transparent window 13a through which an interior of the heating chamber 11 can be visualized. An operation panel 23 is provided, for example, below the door 13, and includes a starter switch 23a for instructing a start of heating, a cancellation switch 23b for instructing an end of heating, a display portion 23c, and a dial knob 23d for selecting cooking programs which are prepared in advance or for enabling a manual operation. In this way, the operation panel 23 is provided in a position which facilitates the visualization of the interior of the heating chamber 11, whereby the switch or the dial knob can easily be operated while verifying the interior of the heating chamber 11 and displayed contents on the display portion 23c.

As shown in Figs. 2 and 3, for example, an infrared ray generating means 20 serving as a steam transmissive optical heater can be used as the upper heat source (20) which is provided at the upper side of the heating chamber 11. As the infrared ray generating means 20, three heaters containing, for example, an argon heater 20b provided at the center of a ceiling surface and Miraclon heaters 20b provided on front and rear sides of the argon heater 20a, respectively. The infrared ray generating means 20 and the high-frequency heat source 21 are controlled by the control unit 24 so that the argon heater 20a and the Miraclon heaters 20b radiate infrared rays of a wavelength which is difficult to be absorbed by vapors so as to allow the infrared rays to pass through vapors. Accordingly, the infrared rays are applied to the second object to be heated 12b (or to the first object to be heated 12a when the heating plate 30 is not provided) for cooking.

The argon heater 20a includes a tungsten wire as a core wire, and argon gas is sealed in a transparent tubular member. This argon heater 20a has characteristics that it is activated quicker than the Miraclon heaters 20b.

Although the Miraclon heaters 20b have conventionally been in use, the Miraclon heaters 20b generate a wavelength which is longer than that of the argon heater 20a and are activated quicker than a mica heater. Therefore, the Miraclon heaters 20b are suitable for browning surfaces of the first and second objects to be heated 12a, 12b. In addition, the Miraclon heaters 20b are characterized by a low cost.

Here, when the Miraclon heaters 20b is used for a microwave oven, the Miraclon heaters 20b may absorb microwaves and may be heated, whereby a glass material used may be melted. Therefore, it is preferable to use a Miraclon heater 20b in the form of a white tube which has a relatively low dielectric constant and which has difficulty in absorbing microwaves.

Accordingly, a strong heating capability can be obtained within a short length of time and an efficient cooking can be implemented. As used herein, the argon heater 20a and the Miraclon heaters 20b are also referred to as tubular heaters (20) as a common term thereof, if any.

As shown in Figs. 2 and 3, at least the high-frequency heat source 21 is used as the lower heat source which is provided at the lower side of the heating chamber 11. In other words, a heat source in addition to the high-frequency heat source 21 may be provided. The high-frequency heat source 21 includes a magnetron 21 serving as a high-frequency generating means, and there are provided a wave guide 42 configured to guide high-frequency waves generated from the magnetron 21 into the heating chamber 11 and rotating antennas 43 configured to radiate radio waves to the heating chamber 11. The rotating antennas 43 are configured to have radiation directivity. The cooker 10 of the embodiment is configured to control at least a portion of the rotating antennas 43 which has high radiation directivity in a predetermined orientation, so as to more concentrate and radiate microwaves in a specific direction. Arrows shown in Fig. 3 as extending from the bottom surface 12c towards the direction of a ceiling of the heating chamber 11 represent microwaves radiated from the rotating antenna 43. The orientations of the arrows indicate directions in which microwaves are radiated, and the lengths thereof indicate intensities thereof. Fig. 3 shows a case in which microwaves are radiated strongly to the vicinity of a peripheral portion of the heating plate.

Additionally, as shown in Fig. 3, the cooker 10 includes a communication passage 14, a circulation fan 15 and heaters 16 at the rear of a partition board 11d which lies on a far side of the heating chamber 11. Air inside the heating chamber 11 is sucked by the circulation fan 15 and heated by the heaters 16 (flows of the sucked air in by the circulation fan 15 in Fig. 3 are indicated by arrows directed from the heating chamber 11 towards the circulation fan 15). Then, the heated air can be sent out into the heating chamber 11 from outlet holes provided in the partition board 11d (flows of heated air are indicated by arrows directed from the heaters 16 towards the heating chamber 11 indicate).

In addition, the cooker 10 of the invention preferably further includes a steaming heat source 22 so as to supply steam to at least one of the upper and lower heating chambers 11 b, 11 a which are defined on the upper and lower sides of the heating plate 30 in the heating chamber 11.

That is, as shown in Figs. 2 and 3, the steam generating means 22 is provided at the lower side of the heating chamber 11, so as to supply steam into the heating chamber 11. Since steam is supplied continuously into the heating chamber 11 to circulate therein, the vapor density in an area contiguous to the first object to be heated 12a does not become zero, which can prevent the excessive drying on the surface of the first object to be heated 12a. In addition, since steam also circulates to the upper heating chamber 11b defined by the heating plate 30, an increase in temperature at an interior portion of the second object to be heated 12b is promoted, which can prevent the excessive browning on the surface of the second object to be heated 12b placed on the heating plate 30, while a center portion of the second object to be heated 12b does not remain uncooked. Additionally, since appropriate moisture is given to the surface of the second object to be heated 12b, the surface thereof is encompassed by steam. Therefore, the water in the interior portion of the second object to be heated 12b is not likely to escape therefrom. Thus, the second object to be heated 12b can be cooked so that the surface is grilled crispy while juices are kept in the interior portion.

In this way, by using the infrared ray generating means 20 as the optical heater and using the infrared ray generating means 20 as the steam transmissive heater, the optical heaters can be used while using the steaming heat source 22. Therefore, the object to be heated can be heated quickly in a state where the surface of the object to be heated 12b is moisturized.

Further, as shown in Fig. 4, the cooker 10 of the invention includes a temperature detection means 50 for detecting temperatures of the objects to be heated 12a, 12b. In the case of a single-item cooking in which either the first object to be heated 12a or the second object to be heated 12b is cooked, the control unit 24 preferably controls the heat sources 20, 21, 22 based on the temperatures detected by the temperature detection means 50. When the first object to be heated 12a and the second object to be heated 12b are cooked, the control unit 24 preferably controls (refer to Fig. 2) the heat sources 20, 21, 22 based on time.

As shown in Fig. 5, the temperature detection means 50 includes a plurality of infrared detectors 103 which are provided on a substrate 109 so as to be aligned in a row, a case 108 which accommodates the whole of the substrate 109, and a stepper motor 101 for moving the case 108 in a direction perpendicular to a direction in which the infrared detectors 103 are arranged.

A metallic can 105 which seals the infrared detectors 103 therein and an electronic circuit 110 for processing operations of the infrared detectors are provided on the substrate 109. In addition, the can 105 is provided with a lens 104 through which infrared rays pass. Additionally, an infrared pass hole 106 which enables infrared rays to pass therethrough and a hole 107 through which enables lead wires from the electronic circuit 110 to pass therethrough are provided in the case 108.

The rotation motion of the stepper motor 101 can move the case 108 in a direction perpendicular to the direction in which the infrared detectors 103 are arranged in a line.

Fig. 6 is a drawing explaining infrared temperature detection spots on a sectional plane taken along the line C-C' in Fig. 4. As shown in Fig. 6, the cooker 10 of the embodiment can detect temperature distributions in almost all areas within the heating chamber 11, in association with the reciprocating rotary motions of the stepper motor 101.

Specifically, for example, firstly, the temperature detection elements 103 (for example, infrared sensors) of the temperature detection means detect simultaneously a temperature distribution in areas A1 to A4 in Fig. 6. Next, when the stepper motor 101 rotates to move the case 108, the temperature detection elements 103 detect a temperature distribution in areas B1 to B4. Further, the stepper motor 101 rotates to move the case 108, and the temperature detection elements 101 detect a temperature distribution in areas C1 to C4. Similarly, a temperature distribution in areas D1 to D4 is detected.

Following the above-described operations, when the stepper motor 101 rotates reversely, temperature distributions are detected in the reverse order of the areas D1 to D4, the areas C1 to C4, the areas B1 to B4, and the areas A1 to A4. By repeating the above-described operations, the temperature distribution detection means can detect a temperature distribution of the whole of the interior of the heating chamber 11.

By this configuration, when the single-item cooking is performed, the heat sources 20, 21, 22 are controlled based on the temperatures detected by the temperature detection means 50. When the first and second objects to be heated 12a, 12b are cooked, the heat sources 20, 21, 22 are controlled based on time. Thus, an efficient cooking can be implemented.

As shown in Fig. 2, locking portions 17 are provided on opposing side walls 11e, 11f of the heating chamber 11. The heating plate 30 is supported on the locking portions 17 so as to divide the heating chamber 11 into the upper and lower heating chambers 11b, 11a and also to allow the second object to be heated 12b to be placed thereon.

As shown in Fig. 7, the heating plate 30 has a rectangular plate-like shape as a whole and includes resin handles 33 which are provided on both left-and right sides thereof, whereby the heating plate 30 can be pulled out of and installed into the heating chamber 11 in the front-rear direction along the locking portions 17 of the heating chamber 11. Communication holes 32 are provided in a peripheral portion of the heating plate 30 so as to establish communications between the upper and lower heating chambers divided by the heating plate 30 within the heating chamber 11. Accordingly, steam is generated in the lower portion of the heating chamber 11 which is divided by the heating plate 30, and the generated steam is guided into the upper heating chamber 11 b through the communication holes 32 provided in the peripheral portion of the heating plate 30, whereby the second object to be heated 12b placed on the heating plate 30 is cooked. Fig. 3 shows arrows directed from the lower space defined by the heating plate 30 towards the upper space defined by the heating plate 30 by passing through the peripheral portion of the heating plate 30. These arrows indicate flows of steam directed towards the upper space.

In addition, as shown in Fig. 8, it is preferable to provide a heating element 34 containing, for example, a ferrite rubber which generates heat by absorbing high-frequency waves, below a lower surface 30b of the heating plate 30. For example, as shown in Fig. 8(A), the heating element 34 can be provided over the whole surface of the lower surface 30b of the heating plate 30. Alternatively, as shown in Fig. 8(B), the heating element 34 can be provided partially on the lower surface of the heating plate 30.

By doing so, the heating plate 30 is heated as a result that the heating element 34 absorbs a part of high-frequency waves. Therefore, the second object to be heated 12b placed on the heating plate 30 can be heated from a lower side thereof, whereby the second object to be heated can be cooked with good efficiency. In addition, the lower surface 30b of the heating plate 30 contacting the heating element 34 is left unpainted, whereby the thermal conductivity is increased, and the cooking time can be shortened.

Next, a configuration will be described, in which the lower a mounting position of the heating plate 30 becomes, the more high-frequency waves supplied to the lower heating chamber 11a defined below the heating plate 30 from the high-frequency heat source 21 are supplied to the upper side of the heating plate 30.

In a first example, as shown in Fig. 9, side walls 11e, 11f of a heating chamber 11 can be inclined in a direction in which a distance between the side walls 11e, 11f increases as the side walls 11e, 11f extend downwards. Locking portions 17 are provided at predetermined height positions on the side walls 11e, 11f so as to protrude therefrom towards the heating chamber 11 side. In addition, lengths of the locking portions 17 at each of the stages are set so that a distance L between distal end faces 17a of the locking portions 17 which face each other at each stage becomes constant.

By this configuration, the heating plate 30 can be used commonly at every stage. Gaps D1, D2 defined between side end faces of the heating plate 30 and the side walls 11e, 11f of the heating chamber 11 when the heating plate 30 is placed on the locking portions 17 become larger as the heating plate 30 is positioned lower. Because of this, the lower the heating plate 30 is positioned, the more high-frequency waves supplied to the lower side of the heating plate 30 are allowed to move round the heating plate 30 into the upper side of the heating plate 30. Setting the heating plate 30 in a higher position is suitable for cooking a thin slice of fish, an inner temperature of which increases easily and a surface of which is browned beautifully. In addition, setting the heating plate 30 in a lower position is suitable for cooking an object such as meat loaf or roasted pork which is thick and an inner temperature of which is difficult to increase, so the interior portion needs to be heated in a positive fashion by high-frequency waves.

In addition, as show in Fig. 10, one side wall 11e can be provided inclined, whereas the other side wall 11f can be provided vertical. By adopting this configuration, gaps D1, D2 defined between a side end face of the heating plate 30 and the side wall 11e of the heating chamber 11 also become larger as the heating plate 30 is positioned lower. Therefore, the lower the heating plate 30 is positioned, the more high-frequency waves supplied to the lower side of the heating plate 30 are allowed to move round the heating plate 30 into the upper side of the heating plate 30.

In a second example, as shown in Figs. 11(A) and (B), a configuration can be adopted in which supporting members 18 are provided on locking portions 17 which are provided on side walls 11e, 11f of a heating chamber 11 so as to protrude therefrom towards the heating chamber 11 side, and the supporting members 18 has supporting surfaces 18a which are positioned higher from the locking portions 17 and larger high-frequency passages 18b as they are positioned lower in the heating chamber. That is, a height H of the supporting member 18 is made larger as the locking portion 17 is positioned lower, so as to increase a height h of the high-frequency passage 18b.

By this configuration, the lower the locking portions 17 which support the heating plate 30 are positioned, the larger the high-frequency passages 18b which are provided in the supporting members 18 are formed. Therefore, more high-frequency waves (the moving path thereof is indicated by arrows in Fig. 11 (B)) supplied to the lower side of the heating plate 30 are allowed to move round the heating plate 30 into the upper side of the heating plate 30.

In a third example, as shown in Fig. 12, a height H of a supporting groove 19 which is recessed from a side wall 11e of a heating chamber 11 towards the side wall 11e side so as to support the heating plate 30 can be higher as the supporting groove 19 is positioned lower in the heating chamber 11.

By this configuration, when the heating plate 30 is supported in the supporting groove 19 in the side wall 11e of the heating chamber 11, a gap defined between an upper surface of the heating plate 30 and an upper surface of the supporting groove 19 is increased. Therefore, more high-frequency waves supplied to the lower side of the heating plate 30 are allowed to move round the heating plate 30 into the upper side of the heating plate 30.

Thus, according to the cooker 10 described above, the first object to be heated 12a placed on the bottom surface 12c of the heating chamber 11 can be cooked by the lower heat source 21 including the high-frequency heat source based on the cooking information input through the operation unit 23 under control through the control unit 24. Simultaneously, the second object to be heated 12b placed on the heating plate 30 which divides the heating chamber 11 into the upper and lower heating chambers can be cooked by the upper heat source 20 at the same time. At this time, high-frequency waves supplied from the high-frequency heat source 21 are reflected by the reflecting portion 31 provided below the heating plate 30 so as to be radiated on the first object to be heated 12a. Therefore, the heating distribution by microwaves can be changed, so as to mitigate the irregular heating of the object to be heated to implement an efficient cooking, thereby making it possible to shorten the cooking time.

Next, a second embodiment of the invention will be described. Note that the drawings used to illustrate the first embodiment are commonly used, and the repetition of similar descriptions will be omitted.
A cooker 10B according to the second embodiment includes a control unit 24 configured to perform a control so that a temperature at a heating chamber 11b in a heating chamber 11 defined on an upper side of a heating plate 30 becomes higher than a temperature at a heating chamber 11 a defined on a lower side of the heating plate 30, and a reflecting portion 31 is provided below the heating plate 30 which reflects leftwards and rightwards high-frequency waves supplied from a high-frequency heat source 21.

By this configuration, a first object to be heated 12a placed on a bottom surface 12c of the heating chamber 11 is cooked based on cooking information entered from a operation unit 23 under control by the control unit 24. Simultaneously, a second object to be heated 12b placed on the heating plate 30 which divides the heating chamber 11 into two upper and lower sections can be cooked. At this time, the second object to be heated 12b is cooked by setting the temperature at the heating chamber 11 b defined on the upper side of the heating plate 30 to be higher than the temperature at the heating chamber 11 a defined on the lower side of the heating plate 30, and the high-frequency waves supplied from the high-frequency heat source 21 are reflected by the reflecting portion 31 provided below the heating plate 30 so as to be radiated on the first object to be heated 12a. Therefore, the first and second objects to be heated 12a, 12b can be cooked with good efficiency at atmospheric temperatures which are optimum to the respective heating objects to be heated, thereby making it possible to shorten the cooking time and also to have a good finishing.

The cooker of the invention is not limited to the embodiments described above and hence can be modified and improved as required.

This patent application is based on Japanese Patent Application (No. 2007-337594) filed on December 27, 2007, the contents of which are to be incorporated herein by reference.

### Industrial Applicabilily

According to the cooker of the invention, the first object to be heated placed on a placing table at the bottom surface of the heating chamber can be cooked by the lower heat source including the high-frequency heat source, based on the cooking information input through the operation unit by a control of the control unit. Simultaneously, the second object to be heated placed on the heating plate which divides the heating chamber into two upper and lower sections can be cooked by the upper heat source. At this time, the farther the mounting position of the heating plate is located from the upper heat source by lowering the mounting position, the more the high-frequency waves supplied to the heating chamber on the lower side of the heating plate from the high-frequency heat source are supplied to the upper side of the heating plate. Therefore, the second object to be heated can be heated by high-frequency sufficiently. Consequently, the cooker of the invention has advantages that, while a surface of the second object to be heated is cooked by the upper heat source, an interior portion thereof can be cooked with good efficiency. Therefore, the invention is useful in the field related to a cooker which dielectrically heats objects to be heated.

## Claims

1. A cooker comprising:
a heating chamber having a bottom surface on which a first object to be heated is placed;
a heating plate which is detachably provided in the heating chamber and which has an upper surface on which a second object to be heated is placed;
an upper heat source provided on an upper side of the heating chamber, and a lower heat source provided on a lower side of the heating chamber and comprising at least a high-frequency heat source;
an operation unit configured to receive an input of information on a heating treatment for the first and second objects to be heated; and
a control unit configured to individually control the upper heat source and the lower heat source, based on the information on the heating treatment which is input through the operation unit,
wherein the lower a mounting position of the heating plate becomes, the more high-frequency waves supplied to a heating chamber to a lower side of the heating plate from the high-frequency heat source are supplied to an upper side of the heating plate.

2. The cooker according to claim 1, side walls of the heating chamber are inclined in a direction in which a distance between the side walls increases as the side walls extend downwards.

3. The cooker according to claim 1,
wherein supporting members are provided on locking portions protruding from the side walls of the heating chamber towards the heating chamber side so as to support the heating plate, and
wherein the supporting members have supporting surfaces at higher positions from the locking portions and define larger high-frequency wave passages as the supporting portions are positioned lower within the heating chamber.

4. The cooker according to claim 1, wherein supporting grooves are recessed from the side walls of the heating chamber towards the side wall sides so as to support the heating plate, and the supporting grooves have a higher height as the supporting grooves are positioned lower in the heating chamber.

5. The cooker according to claim 1, further comprising a steaming heat source configured to supply steam to at least one of the upper and lower sides of the heating plate in the heating chamber.

6. The cooker according to claim 1, comprising:
a temperature detection means for detecting a temperature of the object to be heated,
wherein in a case of a single-item cooking in which one of the first object to be heated and the second object to be heated is cooked, the control unit controls the heat source based on the temperature detected by the temperature detection means, and
wherein in the case of cooking the first object to be heated and the second object to be heated, the control unit controls the heat source based on time.

7. The cooker according to claim 1, comprising a heating element configured to generate heat by absorbing high-frequency waves which is provided at a part of a reflecting portion of the heating plate.

8. The cooker according to claim 1, comprising an optical heater provided at a part of the heat source.

9. The cooker according to claim 8, the optical heater is a steam transmissive heater.
